# EUROPÄISCHE PATENTSCHRIFT

(11) **EP 1 344 444 B1**
(45) Veröffentlichungstag und Bekanntmachung des Hinweises auf die Patenterteilung: **23.01.2008**
(21) Anmeldenummer: 03100362.7
(22) Anmeldetag: 17.02.2003
(51) Int. Cl.: A01D 41/127

(54) **Einrichtung zur Erfassung des Vorhandenseins eines Gutstroms in einer Erntemaschine**
Device for detecting the presence of a flow in a harvesting machine
Dispositif de détection de la présence de flux de produits dans une moissonneuse

(30) Priorität: 16.03.2002 DE 10211800
(43) Veröffentlichungstag der Anmeldung: 17.09.2003
(73) Patentinhaber: DEERE & COMPANY, Moline, Illinois 61265-8098 (US)
(72) Erfinder: Clauß, Dr. Steffen, 66509, Rieschweiler- Mühlbach (DE)
(74) Vertreter: Holst, Sönke

(56) Entgegenhaltungen:
- EP-A- 1 208 734
- DE-A- 4 035 471
- US-A1- 2002 091 476
- US-A1- 2002 107 625
- US-B1- 6 272 819
- DATABASE WPI Section PQ, Week 198848 Derwent Publications Ltd., London, GB; Class P12, AN 1988-344728 XP002241585 & SU 1 396 992 A (LITH AGRIC MECH ELE), 23. Mai 1988 (1988-05-23)

## Beschreibung

Die Erfindung betrifft eine Anordnung zur Ertragsanzeige und/oder Ertragskartierung, die betreibbar ist, eine Information über die von einer Erntemaschine aufgenommene Erntegutmenge zu erfassen, und die mit einer Einrichtung zur Erfassung des Vorhandenseins eines Gutstroms und einem Durchsatzsensor verbunden ist, wobei die Anordnung derart eingerichtet ist, dass sie nur dann eine von null verschiedene Information über die aufgenommene Erntegutmenge anzeigt und/oder aufnimmt, wenn das Ausgangssignal der Einrichtung zur Erfassung des Vorhandenseins eines Gutstroms auf das Vorhandensein von Erntegut hinweist, und die Einrichtung zur Erfassung des Vorhandenseins eines Gutstroms mit einem Sensor versehen ist, der eingerichtet ist, ein Ausgangssignal abzugeben, das eine Information darüber enthält, ob Erntegut die Erntemaschine durchläuft oder nicht.

Bei Erntemaschinen finden zur Ertragsanzeige und/oder Ertragskartierung Sensoren zur Gutdurchsatzmessung Verwendung, die auf unterschiedlichen physikalischen Prinzipien beruhen. Die Sensoren messen den Erntegutdurchsatz innerhalb gewisser Fehlertoleranzen. Bei vielen Systemen können Durchsätze unterhalb eines bestimmten Schwellenwertes nicht mehr genau gemessen werden. Es ist wegen der Fehlertoleranzen der Sensoren auch denkbar, dass Durchsätze gemessen werden, obwohl kein Erntegut durch die Erntemaschine gefördert wird.

Erntemaschinen sind in der Regel auch mit so genannten Hektarzählern ausgestattet, die zur Messung der abgeernteten Fläche dienen. Sie zählen eine die bearbeitete Fläche repräsentierende Messgröße weiter, wenn eine Reihe von Bedingungen erfüllt sind, wie positive (d. h. nach vorn gerichtete) Fahrgeschwindigkeit, Vorsatz in Ernteposition und sich die Gutbearbeitungs- und/oder -fördereinrichtungen im Betriebsmodus befinden. Da das Vorhandensein von Erntegut nicht abgeprüft wird, wird auch dann die abgeerntete Fläche weitergezählt, wenn tatsächlich kein Erntegutfluss vorhanden ist. Auch bei einer logischen Verknüpfung mit den Signalen der Sensoren zur Gutdurchsatzmessung ist die entsprechende Information nicht immer korrekt und führt zu unrichtigen Flächenwerten.

Es wurde daher vorgeschlagen, den Sensor zur Gutdurchsatzmessung mit einem Sensor zur Erfassung des Vorhandenseins eines Erntegutstroms zu kombinieren. In der DE 199 03 471 C wird zu diesem Zweck eine Lichtschranke in der Austrageinrichtung eines Feldhäckslers verwendet. Nur wenn sie einen Gutfluss erfasst, wird ein von null verschiedener Messwert für den Gutfluss abgegeben. Mit der Lichtschranke ist jedoch ein zusätzliches Bauteil erforderlich, dessen mit dem Gutstrom in Berührung kommende Teile sich nach längerem Gebrauch abnutzen und verschmutzen können.

Bei Mähdreschern finden zur Verlustkornerfassung akustische Sensoren Verwendung (s. DE 40 35 471 A und EP 1 208 734 A). Sie erfassen Schwingungen, die von Körnern verursacht werden, die auf Prallplatten oder Stangen fallen.

Die SU 1 396 992 A beschreibt einen Feldhäcksler, bei dem der Häckseltrommel ein Schwingungsaufnehmer zugeordnet ist. Anhand der vom Schwingungsaufnehmer aufgenommenen Schwingungssignale wird ein dem Erntegutfluss hinzuzufügendes Siliermittel dosiert, da die Schwingungssignale einen Rückschluss auf den jeweiligen Erntegutfluss erlauben.

Es ist somit zwar grundsätzlich bekannt, vom Erntegutfluss verursachte Schwingungen zu erfassen, um eine Information über den Erntegutfluss zu erlangen, aber bisher dienen derartige Sensoren nur zur Durchsatzmessung.

Das der Erfindung zugrunde liegende Problem wird darin gesehen, bei einer Anordnung zur Ertragsanzeige und/oder Ertragskartierung eine verbesserte Einrichtung zur Erfassung des Vorhandenseins eines Gutstroms bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Anordnung zur Ertragsanzeige und/oder Ertragskartierung umfasst eine Einrichtung zur Erfassung des Vorhandenseins eines Gutstroms mit einem Sensor. Das Vorhandensein bzw. die Abwesenheit des Gutstroms in der Erntemaschine wird akustisch erfasst. Wenn ein Erntegutstrom vorhanden ist, verursacht er bei der Bearbeitung und/oder bei der Förderung in der Erntemaschine Geräusche. Der Sensor erfasst diese Geräusche, d. h. mechanische oder akustische Schwingungen. Aus dem Ausgangssignal des Sensors wird die gewünschte Information über das Vorhandensein des Gutstroms abgeleitet.

Der Sensor dient bei einer Anordnung zur Ertragsanzeige und/oder Ertragskartierung dazu, sich auf die aufgenommene Erntegutmenge beziehende Messwerte des Durchsatzsensors nur dann zu berücksichtigen, wenn der Sensor ein Signal liefert, das darauf hinweist, dass tatsächlich ein Erntegutfluss vorhanden ist. Anderenfalls wird die Ertragsmenge als null erfasst. Derartige Ertragskartierungseinrichtungen arbeiten in der Regel georeferenziert.

Auf diese Weise erhält man die gewünschte Information durch einen außerhalb des Gutstroms anordenbaren Sensor, der keinem Verschleiß unterliegt und während des Betriebs nicht verunreinigt.

Als Sensor kommen unterschiedliche Ausführungsformen in Betracht. Es wäre denkbar, ein Mikrofon zu verwenden, das zweckmäßigerweise in der Nähe einer Stelle angeordnet ist, an der der Gutstrom ein möglichst hohes Geräuschniveau bedingt, um eine möglichst gute Unterscheidung von Untergrundgeräuschen zu ermöglichen. Das Mikrofon kann die Vibrationen rein durch Luftschall (akustisch) oder durch Körperschall (mechanisch) erfassen. Es kann sich dabei insbesondere um einen Klopfsensor handeln, wie er von Gegenschneideneinstelleinrichtungen von Feldhäckslern her an sich bekannt ist.

Das Ausgangssignal des Sensors kann auch zur Steuerung anderer Elemente der Erntemaschine herangezogen werden. Handelt es sich beispielsweise um einen an der Gegenschneide einer Häckseltrommel angeordneten Klopfsensor, kann sein Ausgangssignal zum einen zur Einstellung der Position der Gegenschneide und zum anderen zum Nachweis eines Gutflusses dienen. Bei einer anderen Ausführungsform ist der Sensor am Dreschkorb eines Mähdreschers angeordnet. Sein Ausgangssignal kann zur Einstellung des Dreschkorbspaltes herangezogen werden.

In den Zeichnungen sind zwei nachfolgend näher beschriebene Ausführungsbeispiele der Erfindung dargestellt. Es zeigt:
- Fig. 1: einen Feldhäcksler in Seitenansicht und in schematischer Darstellung und
- Fig. 2: eine schematische Seitenansicht eines Mähdreschers.

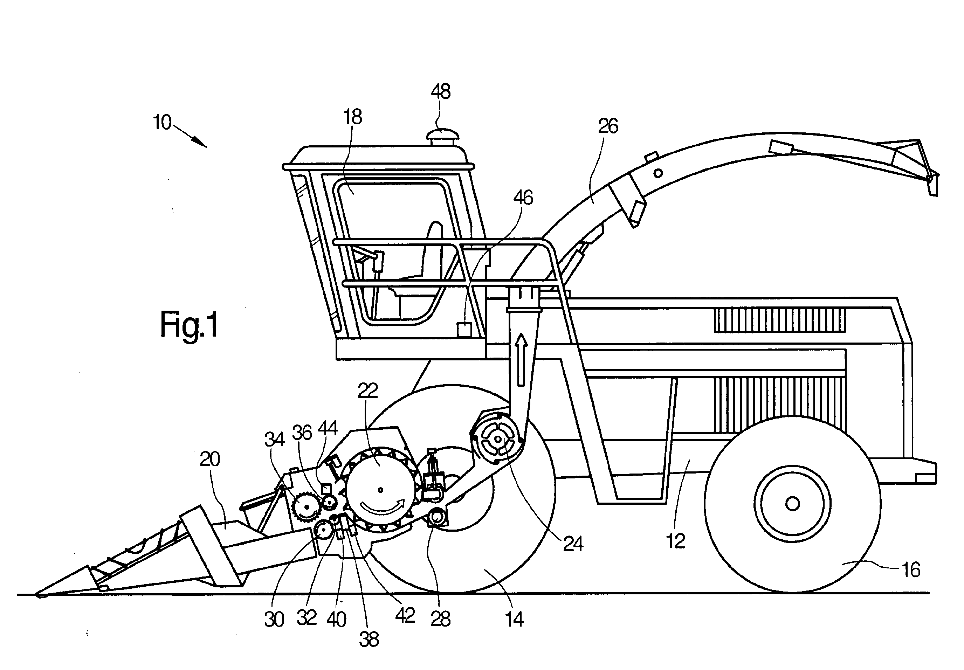

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Zwischen der Erntegutaufnahmevorrichtung 20 und der Häckseltrommel 22 wird das Gut durch untere Vorpresswalzen 30, 32 und obere Vorpresswalzen 34, 36 transportiert. Die über den Umfang der Häckseltrommel 22 verteilten Messer wirken mit einer Gegenschneide 38 zusammen, um das Gut zu häckseln. Die Gegenschneide 38 ist mit einer Verstelleinrichtung 40 versehen, die zum Verfahren der Gegenschneide 38 in horizontaler Richtung auf die Häckseltrommel 22 zu und von ihr fort eingerichtet ist. Sie dient zum Einstellen des Schneidspalts. An der Gegenschneide 38 ist ein Klopfsensor 42 angeordnet. Er erfasst die von den Messern der Häckseltrommel 22 verursachten Geräusche, wenn die Gegenschneide 38 näher an die Häckseltrommel , 22 gelangt. Die Ausgangssignale des Klopfsensors 42 dienen in an sich bekannter Weise zur Einstellung der Position der Gegenschneide 38.

Ein Durchsatzsensor 44 ist der oberen, hinteren Vorpresswalze 36 zugeordnet. Diese Vorpresswalze 36 ist gegen die Kraft einer Feder durch das Erntegut nach oben bewegbar. Der Durchsatzsensor 44 umfasst ein Potentiometer, das von der Vorpresswalze 36 bei ihrer Bewegung nach oben verstellt wird. Der Durchsatzsensor 44 stellt somit eine Information über den jeweiligen Durchsatz bereit. Der Durchsatzsensor 44 ist mit einem in der Fahrerkabine 18 angeordneten Computer 46 verbunden, welcher auch mit einem Positionssensor 48 verbunden ist, welcher als Ausführungsbeispiel in Form einer GPS-Antenne dargestellt ist.

Der Computer 46 erfasst während der Ernte die Signale des Durchsatzsensors 44 und des Positionssensors 48 und erstellt eine georeferenzierte Ertragskarte und stellt dem Bediener auch eine Ertragsanzeige bereit. Dabei kann auch ein Vortriebsgeschwindigkeitssignal berücksichtigt werden, das von einem an sich bekannten Sensor bereitgestellt wird. Das Ertragssignal kann auch zur selbsttätigen Steuerung der Vortriebsgeschwindigkeit herangezogen werden. Da der Abstand zwischen der oberen, hinteren Vorpresswalze 36 und der unteren, hinteren Vorpresswalze 32 sich bei kleinen Erntegutdurchsätzen nicht wesentlich oder überhaupt nicht von dem Abstand unterscheidet, den sie einnehmen, wenn überhaupt kein Durchsatz vorhanden ist, würde der Durchsatzsensor 44 bei geringen oder fehlenden Durchsätzen tatsächlich nicht vorhandene Messwerte anzeigen, die aber angezeigt bzw. kartiert würden.

Um die Genauigkeit der Ertragsanzeige und -kartierung zu verbessern, ist der Computer 46 mit dem Klopfsensor 42 verbunden. Dessen analoge Ausgangssignale werden im Computer 46 oder durch einen separaten Wandler digitalisiert. Der Klopfsensor 42 liefert ein Ausgangssignal, dessen Amplitude und/oder Frequenz eine Information darüber enthält, ob gerade Erntegut bearbeitet wird oder nicht, da das Häckseln des Ernteguts mechanische Schwingungen in der Gegenschneide 38 bewirkt, die vom Klopfsensor 42 aufgenommen werden. Die vom Durchsatzsensor 44 gelieferten Messwerte werden nur dann als von null verschieden kartiert, wenn das Ausgangssignal des Klopfsensors 42 auf verarbeitetes Erntegut hinweist. Die beschriebenen Kartierungsfehler sind somit vermieden.

Der Computer 46 erfasst außerdem die Größe der von der Erntemaschine 10 abgeernteten Fläche. Dazu wird das Signal des Positionssensors 48 herangezogen. In analoger Weise erfasst der Computer 46 eine überfahrene Fläche nur dann als abgeerntet, wenn das Ausgangssignal des Klopfsensors 42 darauf hindeutet, dass Erntegut verarbeitet wird. Bei der Flächenerfassung können auch Signale berücksichtigt werden, die auf den Betriebszustand der Erntegutaufnahmevorrichtung 22 und der Häckseltrommel 22 hinweisen.

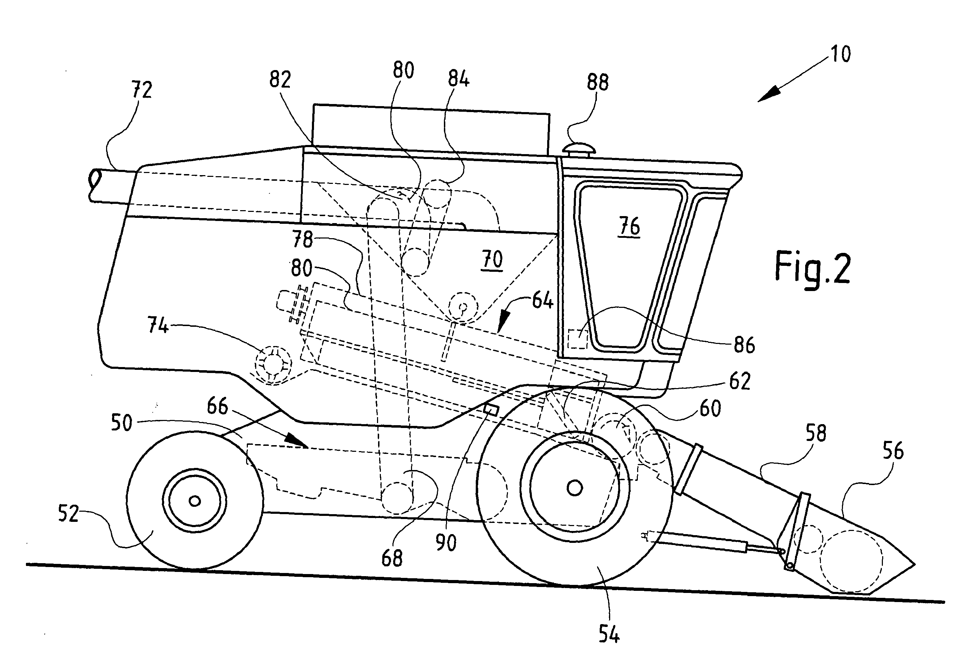

Eine zweite Ausführungsform der Erfindung ist in der Figur 2 dargestellt, die eine Erntemaschine 10 in Form eines selbstfahrenden Mähdreschers zeigt. Er umfasst einen Hauptrahmen 50, der bewegbar durch eine Radanordnung abgestützt wird, die hintere lenkbare Räder 52 und vordere angetriebene Räder 54 aufweist.

Ein vertikal verstellbarer Erntevorsatz 56 mit einem Mähwerksbalken wird verwendet, stehendes Erntegut abzuschneiden und abgeschnittenes Gut einem Schrägförderer 58 zuzuführen. Der Schrägförderer 58 ist schwenkbar mit dem Hauptrahmen 50 verbunden und umfasst eine Fördereinrichtung, um das geerntete Gut einer Leittrommel 60 zuzuführen. Die Leittrommel 60 führt das Gut nach oben durch einen Einlassübergangsabschnitt 62 hindurch und einer drehbaren Dresch- und Trenneinrichtung 64 zu. Andere Orientierungen und Typen der Drescheinrichtungen und andere Typen von Erntevorsätzen 66, wie quer angeordnete Rahmen, die einzelne Reiheneinheiten tragen, könnten auch verwendet werden.

Die rotierende Dresch- und Trenneinrichtung 64 drischt und trennt das geerntete Gut. Das Korn und die Spreu fallen durch Roste am Boden der Dresch- und Trenneinrichtung 64 in ein Reinigungssystem 66. Das Reinigungssystem 66 entfernt die Spreu und führt das saubere Korn einem Elevator 68 zu. Der Elevator 68 für sauberes Korn legt das saubere Korn in einem Korntank 70 ab. Das saubere Korn im Korntank 70 kann durch einen Entladeschneckenförderer 72 auf einen Lastwagen oder Anhänger entladen werden.

Ausgedroschenes, vom Korn befreites Stroh wird von der Dresch- und Trenneinrichtung 64 durch einen Auslass einer Auswurftrommel 74 zugeführt. Die Auswurftrommel 74 stößt das Stroh an der Rückseite des Mähdreschers 10 aus. Es ist anzumerken, dass die Auswurftrommel 74 das vom Korn befreite Gut auch direkt einem Strohhäcksler zuführen könnte. Der Betrieb der Erntemaschine 10 wird von einer Bedienerkabine 76 aus gesteuert.

Die drehbare Dresch- und Trenneinrichtung 64 umfasst ein zylindrisches Rotorgehäuse 78 und einen im Rotorgehäuse 78 angeordneten, hydraulisch angetriebenen Rotor 80. Der vordere Teil des Rotors 80 und das Rotorgehäuse 78 definieren einen Beschickungsabschnitt. Stromab des Beschickungsabschnitts sind ein Dreschabschnitt, ein Trennabschnitt und ein Auslassabschnitt. Der Rotor 80 ist im Beschickungsabschnitt mit einer konischen Rotortrommel versehen, die wendelförmige Beschickungselemente zum Eingreifen in Gut aufweist, das sie von der Leittrommel 60 und vom Einlassübergangsbereich 62 erhält. Unmittelbar stromab des Beschickungsabschnitts befindet sich der Dreschabschnitt. Im Dreschabschnitt weist der Rotor 80 eine zylindrische Rotortrommel auf, die mit einer Anzahl von Dreschelementen versehen ist, um das vom Beschickungsabschnitt erhaltene Gut zu dreschen. Stromab des Dreschabschnitts befindet sich der Trennabschnitt, in dem das im gedroschenen Gut noch gefangene Korn freigesetzt wird und durch ein bodenseitiges Rost im Rotorgehäuse 78 in das Reinigungssystem 66 fällt. Der Trennabschnitt geht in einen Auslassabschnitt über, in dem das vom Korn befreite Gut (Stroh) aus der Dresch- und Trenneinrichtung ausgestoßen wird.

Am Auslass des Elevators 68 ist in einem Übergangsgehäuse 82 ein Durchsatzsensor 80 in Form eines an sich bekannten Prallplattensensors angeordnet. Das aus dem Elevator 68 kommende Korn wird am Boden des Übergangsgehäuses 82 von einem Schneckenförderer 84 in den Korntank 70 gefördert. Ein Computer 86 ist elektrisch mit dem Durchsatzsensor 80 und einem Positionssensor 88 verbunden, der hier als GPS-Antenne dargestellt ist. Der Computer 86 ist betreibbar, beim Erntebetrieb anhand der Messwerte des Durchsatzsensors 80 eine georeferenzierte Ertragskarte zu erstellen und dem Bediener den momentanen Ertrag anzuzeigen. Da die Messwerte des Durchsatzsensors 80 bei relativ geringen Erträgen recht fehlerbehaftet sind, ist der Computer 86 mit einem weiteren Sensor 90 verbunden, der eingerichtet ist, zu erfassen, ob überhaupt ein Gutstrom vorhanden ist. Die Messwerte des Durchsatzsensors 80 werden nur dann als von null verschieden angesehen, wenn der Sensor 90 auf das Vorhandensein eines Gutstroms hinweist. Der Computer 86 kann, wie in der ersten Ausführungsform, die abgeerntete Fläche erfassen, wobei die Signale des Sensors 90 in der beschriebenen Weise berücksichtigt werden.

Der Sensor 90 ist am Dreschabschnitt des Rotorgehäuses 78 der Dresch- und Trenneinrichtung 64 angeordnet ist. Der Sensor 90 ist ein akustischer Sensor und erfasst mechanische Vibrationen, die das Erntegut beim Dreschen erzeugt. Die Signale des Sensors 90 werden digitalisiert und dem Computer 86 zugeführt. Anhand der Frequenz und/oder Amplitude der Signale des Sensors 90 erkennt der Computer 86, ob Erntegut verarbeitet wird oder nicht. Die Signale des Sensors 90 können auch zur selbsttätigen Einstellung des Abstands zwischen Rotor 80 und des Dreschkorbs im Dreschabschnitt herangezogen werden.

Es bleibt anzumerken, dass der Sensor 90 auch tangential beaufschlagten Dreschtrommeln von Mähdreschern mit Strohschüttlern oder von Mähdreschern mit einer Tangentialdreschtrommel nachgeordneten Abscheiderotoren zugeordnet werden kann. In jedem Fall erfasst er die während des Dreschens vom Erntegut verursachten Geräusche.

Der Sensor 90 könnte auch im Schrägförderer 58 angeordnet sein und Geräusche erfassen, die das Gut beim Aufprall an Kanten oder beim Passieren irgendwelcher Flächen verursacht. Derartige Sensoren finden derzeit bereits zum Nachweis steinartiger Objekte Verwendung (US 4 343 137 A).

## Patentansprüche

1. Anordnung zur Ertragsanzeige und/oder Ertragskartierung, die betreibbar ist, eine Information über die von einer Erntemaschine (10) aufgenommene Erntegutmenge zu erfassen, und die mit einer Einrichtung zur Erfassung des Vorhandenseins eines Gutstroms und einem Durchsatzsensor (44, 80) verbunden ist, wobei die Anordnung derart eingerichtet ist, dass sie nur dann eine von null verschiedene Information über die aufgenommene Erntegutmenge anzeigt und/oder aufnimmt, wenn das Ausgangssignal der Einrichtung zur Erfassung des Vorhandenseins eines Gutstroms auf das Vorhandensein von Erntegut hinweist, und die Einrichtung zur Erfassung des Vorhandenseins eines Gutstroms mit einem Sensor (42, 90) versehen ist, der eingerichtet ist, ein Ausgangssignal abzugeben, das eine Information darüber enthält, ob Erntegut die Erntemaschine (10) durchläuft oder nicht, **dadurch gekennzeichnet, dass** der Sensor (42, 90) eingerichtet ist, bei der Bearbeitung und/oder Förderung des Gutstroms in der Erntemaschine (10) entstehende Vibrationen zu erfassen.

2. Anordnung nach Anspruch 1, **dadurch gekennzeichnet, dass** sie betreibbar ist, die aufgenommene Erntegutmenge georeferenziert zu erfassen.

3. Anordnung nach Anspruch 1 oder 2, **dadurch gekennzeichnet, dass** der Sensor (42, 90) ein akustischer Sensor, insbesondere ein Klopfsensor ist.

4. Anordnung nach einem der Ansprüche 1 bis 3, **dadurch gekennzeichnet, dass** das Ausgangssignal des Sensors (42, 90) auch zur Steuerung anderer Elemente der Erntemaschine (10) heranziehbar ist.

5. Anordnung nach einem der vorhergehenden Ansprüche, **dadurch gekennzeichnet, dass** der Sensor (42) ein an der Gegenschneide (38) einer Häckseltrommel (22) angeordneter Klopfsensor ist.

6. Anordnung nach einem der Ansprüche 1 bis 4, **dadurch gekennzeichnet, dass** der Sensor (90) an einem Dreschkorb (78) angeordnet ist.

## Claims

1. Yield-indicating and/or yield-mapping arrangement, which can be operated to register information about the crop quantity received by a harvester (10) and which is connected to a device for detecting the presence of a crop flow and to a throughput sensor (44, 80), wherein the arrangement is set up such that it indicates and/or records non-zero information about the received crop quantity only when the output signal of the device for detecting the presence of a crop flow points to the presence of crop and whether the device for detecting the presence of a crop flow is provided with a sensor (42, 90) which is set up to emit an output signal containing information on whether or not crop is running through the harvester (10), **characterized in that** the sensor (42, 90) is set up to detect vibrations generated in the processing and/or conveyance of the crop flow in the harvester (10).

2. Arrangement according to Claim 1, **characterized in that** it can be operated to register the received crop quantity in a geo-referenced manner.

3. Arrangement according to Claim 1 or 2, **characterized in that** the sensor (42, 90) is an acoustic sensor, in particular a knocking sensor.

4. Arrangement according to one of Claims 1 to 3, **characterized in that** the output signal of the sensor (42, 90) can also be used to control other elements of the harvester (10).

5. Arrangement according to one of the preceding claims, **characterized in that** the sensor (42) is a knocking sensor disposed on the countercutting knife edge (38) of a chopping drum (22).

6. Arrangement according to one of Claims 1 to 4, **characterized in that** the sensor (90) is disposed on a thresher concave (78).

## Revendications

1. Dispositif pour l'affichage du rendement et/ou la cartographie du rendement, qui peut être utilisé pour détecter une information relative à la quantité de végétaux récoltés par une machine de récolte (10), et qui est relié à un dispositif destiné à détecter la présence d'un flux de végétaux et à un capteur de débit (44, 80), le dispositif étant conçu de telle sorte qu'il affiche et/ou enregistre une information différente de zéro, relative à la quantité de végétaux récoltés, uniquement lorsque le signal de sortie du dispositif destiné à détecter la présence d'un flux de végétaux signale la présence de végétaux, et le dispositif destiné à détecter la présence d'un flux de végétaux est équipé d'un capteur (42, 90) qui est conçu pour délivrer un signal de sortie qui contient une information signalant que des végétaux sont acheminés ou non à travers la machine de récolte (10), **caractérisé en ce que** le capteur (42, 90) est conçu pour détecter des vibrations générées lors du traitement et/ou du transport du flux de végétaux dans la machine de récolte (10).

2. Dispositif selon la revendication 1, **caractérisé en ce qu'**il peut être utilisé pour détecter selon un géoréférencement la quantité de végétaux récoltés.

3. Dispositif selon la revendication 1 ou 2, **caractérisé en ce que** le capteur (42, 90) est un capteur acoustique, en particulier un capteur de cognement.

4. Dispositif selon l'une quelconque des revendications 1 à 3, **caractérisé en ce que** le signal de sortie du capteur (42, 90) peut également être pris en compte pour commander d'autres éléments de la machine de récolte (10).

5. Dispositif selon l'une quelconque des revendications précédentes, **caractérisé en ce que** le capteur (42) est un capteur de cognement agencé sur la contre-lame (38) d'un tambour de hachage (22).

6. Dispositif selon l'une quelconque des revendications 1 à 4, **caractérisé en ce que** le capteur (90) est agencé sur un contre-batteur (78).
